**Europäisches Patentamt**

**European Patent Office**

**Office européen des brevets**

(19)

(11) Veröffentlichungsnummer : **0 421 249 B1**

(12) ## EUROPÄISCHE PATENTSCHRIFT

(45) Veröffentlichungstag der Patentschrift :
**23.03.94 Patentblatt 94/12**

(51) Int. Cl.$^5$ : **H01F 1/37**

(21) Anmeldenummer : **90118427.5**

(22) Anmeldetag : **26.09.90**

(54) **Hochviskose magnetische Flüssigkeiten.**

(30) Priorität : **05.10.89 DE 3933210**

(43) Veröffentlichungstag der Anmeldung :
**10.04.91 Patentblatt 91/15**

(45) Bekanntmachung des Hinweises auf die
Patenterteilung :
**23.03.94 Patentblatt 94/12**

(84) Benannte Vertragsstaaten :
**DE FR GB NL**

(56) Entgegenhaltungen :
**EP-A- 0 249 229**

(56) Entgegenhaltungen :
**PATENT ABSTRACTS OF JAPAN vol. 13, no.
518 (E-848)(3866) 20 November 1989, & JP-
A-01 209704 (NOK CORP) 23 August 1989,
PATENT ABSTRACTS OF JAPAN vol. 13, no.
437 (E-826)(3785) 29 September 1989, & JP-
A-01 165104 (K.NAKATSUKA) 29 Juni 1989,**

(73) Patentinhaber : **BASF Aktiengesellschaft
Carl-Bosch-Strasse 38
D-67063 Ludwigshafen (DE)**

(72) Erfinder : **Mair, Gunther, Dr.
Corneliusstrasse 15
D-6800 Mannheim 1 (DE)**
Erfinder : **Feser, Rainer, Dr.
Colgensteiner Weg 25
D-6718 Gruenstadt (DE)**

EP 0 421 249 B1

**Beschreibung**

Die Erfindung betrifft hochviskose magnetische Flüssigkeiten, im wesentlichen bestehend aus in einer Trägerflüssigkeit kolloidal dispergierten, mit einem Tensid beschichteten superparamagnetischen Feststoffteilchen.

Magnetische Flüssigkeiten sind hochstabile kolloidale Suspensionen extrem feinteiliger ferro- oder ferrimagnetischer Materialien, welche wegen ihrer geringen Teilchengröße superparamagnetisches Verhalten zeigen, in nichtwäßrigen, polaren oder unpolaren Flüssigkeiten.

Die Herstellung solcher magnetischer Flüssigkeiten ist bekannt. So ist in der US-A-3 843 540 ein Verfahren zur Herstellung magnetischer Flüssigkeiten aus superparamagnetischen Feststoffteilchen und unpolaren flüssigen Medien beschrieben, bei dem die Teilchen aus wäßrigen Metallsalzlösungen, welche der chemischen Zusammensetzung der Teilchen entsprechen, mittels einer Base ausgefällt, mit Tensiden beschichtet, in unpolare Flüssigkeiten überführt, aus diesen mittels Aceton ausgeflockt, abgetrennt und mit Aceton gewaschen werden, um die anschließend in einer unpolaren Flüssigkeit zu redispergieren. Aus der US-A-3 351 413 ist bekannt, daß sich neben kubischen Ferriten, Magnetit und $\gamma$-$Fe_2O_3$ sowie jedem anderen beliebigen festen magnetischen Material, das in geeigneter Weise zerkleinert werden kann, auch kubische Mangan-Zink-Ferrite allgemein für die Herstellung superparamagnetischer Feststoffteilchen und magnetischer Flüssigkeiten eignen.

Superparamagnetische Ferrite bekannter Zusammensetzung weisen aber den Nachteil auf, daß ihre Sättigungsmagnetisierung $M_s$ vergleichsweise niedrig ist. Dementsprechend müssen für die Herstellung magnetischer Flüssigkeiten hoher Sättigungsmagnetisierung $M_s$ jeweils große Mengen an Ferriten verwendet werden. Die betreffenden magnetischen Flüssigkeiten sind dann wegen ihres notwendigerweise hohen Feststoffgehalts oftmals instabil und daher für viele Anwendungszwecke nur bedingt geeignet. Zur Verbesserung der Sättigungsmagnetisierung wurde deshalb schon der Einbau von Kobalt-, Nickel- und/oder Manganionen in das Ferritgitter vorgeschlagen (US-A-4 810 401).

Ihre Anwendung finden magnetische Flüssigkeiten in Gleitlagern, Wellendichtungen und zum Dämpfen von Bewegungen z.B. in Schrittmotoren oder in Lautsprecherspulen. Dabei ist neben den üblichen Eigenschaften, wie der Sättigungsmagnetisierung, der Langzeitstabilität gegen Sedimentation, auch eine einstellbare Viskosität erforderlich, insbesondere in einem höheren Viskositätsbereich, als er bei Dichtungsanwendungen üblich ist. Die Viskosität kann bekanntermaßen durch die Wahl einer zäheren Trägerflüssigkeit gesteigert werden. Dabei tritt jedoch als Nachteil eine Verschlechterung der Sedimentationsstabilität auf.

Weiterhin steigt die Viskosität mit dem Gehalt an superparamagnetischen Partikeln an. Dadurch ergibt sich jedoch eine Erhöhung der Sättigungsmagnetisierung, was nicht immer wünschenswert ist. Vor allem aber sinkt die Stabilität im Magnetfeld. Des weiteren läßt sich die Viskosität durch Zusatz von Feststoffadditiven, wie z. B. Ruß, erhöhen. Diese Flüssigkeiten sind jedoch nicht mehr genügend stabil, und das Fließverhalten nimmt gewöhnlich eine nicht Newton'sche Charakteristik an, was ebenfalls unerwünscht ist.

Aufgabe der vorliegenden Erfindung war es somit, eine magnetische Flüssigkeit bereitzustellen, welche sich durch eine gezielte Einstellung hoher kinematischer Viskositäten auszeichnet, ohne daß sich die übrigen Eigenschaften, wie Sättigungsmagnetisierung und vor allem die Langzeitstabilität verändern.

Es wurde nun gefunden, daß magnetische Flüssigkeiten, im wesentlichen bestehend aus in einer Trägerflüssigkeit kolloidal dispergierten, mit einem Tensid beschichteten superparamagnetischen Feststoffteilchen die gestellte Aufgabe erfüllen, wenn die Feststoffteilchen aus einer Mischung aus superparamagnetischen Ferritteilchen mit einer Sättigungsmagnetisierung $M_s$ von größer 50 nTm³/g und aus Ferritteilchen mit einer Sättigungsmagnetisierung $M_s$ von kleiner 10 nTm³/g bestehen.

In einer besonderen Ausgestaltung der erfindungsgemäßen magnetischen Flüssigkeiten bestehen die kolloidal dispergierten Feststoffteilchen aus superparamagnetischen Teilchen mit einer Sättigungsmagnetisierung $M_s$ von größer 60 und bis zu 90 nTm³/g und Ferritteilchen, insbesondere Zinkferritteilchen, mit einer Sättigungsmagnetisierung von kleiner 5 nTm³/g und insbesondere aus nahezu unmagnetischen Teilchen, jeweils mit einer mittleren Teilchengröße zwischen 3 und 20 nm.

Die superparamagnetischen Feststoffteilchen, welche in den erfindungsgemäßen magnetischen Flüssigkeiten enthalten sind, sind bekannt. Die üblicherweise eingesetzten Materialien werden ausgewählt aus der Gruppe der Ferrite.

Hierbei werden kubische Ferrite, wie sie beispielsweise in der US-A 4 810 401 offenbart sind, und dort insbesondere die superparamagnetischen kubischen Kobalt-Mangan-Zink-Eisen-Ferrite, die kubischen Nickel-Mangan-Zink-Eisen-Ferrite sowie die Mangan-Zink-Eisen-Ferrite besonders bevorzugt. Die Teilchengröße dieser Feststoffteilchen entspricht einer inneren Oberfläche nach BET von 40 bis 130, vorzugsweise 50 bis 120 und insbesondere 60 bis 110 g/m². In einem Magnetfeld der Stärke von 160 kA/m weisen sie eine Sättigungsmagnetisierung $M_s$ von über 50 nTm³/g und insbesondere von über 60 und bis zu 90 nTm³/g auf.

2

Neben den genannten superparamagnetischen Feststoffteilchen enthalten die erfindungsgemäßen magnetischen Flüssigkeiten noch die nur schwach oder nahezu unmagnetischen Ferritteilchen. Geeignet sind hierfür zinkhaltige kubischen Ferrite und insbesondere Zinkferrite mit einer $M_s$ von kleiner 5 $nTm^3/g$. Ihre Herstellung läßt sich beispielsweise in gleicher Weise, wie für die Feststoffteilchen in der US-A-4 810 401 beschrieben, erreichen.

Für die erfindungsgemäßen magnetischen Flüssigkeiten wird nun die angegebene Mischung aus den beiden Feststoffteilchen eingesetzt, um die hohe kinematische Viskosität bei gleichbleibender Sättigungsmagnetisierung und insbesondere hoher Langzeitstabilität zu erreichen. Der Anteil der nur schwach oder nahezu unmagnetischen Ferritfeststoffteilchen richtet sich nach der für die magnetische Flüssigkeit geforderten Viskosität und der Art der übrigen Komponenten. Er sollte jedoch, bezogen auf die Gesamtmenge an Feststoffteilchen, mindestens 1 Gew.% betragen, wobei Mengen zwischen 20 und 70 Gew.% besonders zweckmäßig sind.

Die Verfahren zur Herstellung der magnetischen Flüssigkeiten sind allgemein bekannt, sie lassen sich auch für die Herstellung der erfindungsgemäßen magnetischen Flüssigkeiten heranziehen. Eine besonders zweckmäßige Methode ist in der US-A 4 810 401 offenbart. Hiebei hat sich der Einsatz einer Trägerflüssigkeit, enthaltend eine polymere Komponente, wie z.B. eines Polyisobutylens oder eines Polyesters mit einem Molekulargewicht von größer 500, bewährt.

Die erfindungsgemäßen magnetischen Flüssigkeiten zeichnen sich durch eine hohe kinematische Viskosität aus, welche mindestens 500 $mm^2/s$ (bei 20°C) beträgt, wobei insbesondere die dennoch hohe Langzeitstabilität von besonderer Wichtigkeit ist.

Die Erfindung sei anhand folgender Beispiele im Vergleich zu Versuchen nach dem Stand näher erläutert.

Beispiele 1 bis 3

Eine Mischung aus Mangan-Zinkferrit mit einer Sättigungsmagnetisierung von 60 $nTm^3/g$ und Zinkferrit mit der Zusammensetzung $ZnFe_2O_4$ und einer Sättigungsmagnetisierung von 3 $nTm^3/g$ jeweils mit einer mittleren Teilchengröße zwischen 7 und 12 nm wurde in Wasser aufgeschlämmt. Zu dieser Aufschlämmung wurde eine Lösung von Natriumoleat in Wasser zugegeben, wobei die Natriumoleatmenge so gewählt worden war, daß sie für die Beschichtung der Feststoffteilchen zumindest ausreichte. Zu dieser Dispersion beschichteter Feststoffteilchen in wäßrigem Medium wurden mindestens ebenso viele Volumenteile Petrolether zugegeben, wie an Volumenteilen wäßrigen Mediums vorlagen. Die resultierende Mischung aus zwei flüssigen Phasen wurde durchmischt, wobei die tensidbeschichteten Feststoffteilchen in den Petrolether überführt wurden. Danach wurde die Mischung so lange stehen gelassen, bis sich die beiden flüssigen Phasen wieder vollständig getrennt hatten. Das feststoffreiche wäßrige Medium wurde dann abgetrennt und verworfen. Die beschichteten Feststoffteilchen wurden nun zweimal durch Zugabe von mindestens ebenso vielen Volumenteilen Methanol, wie an Volumenteilen Petrolether vorlagen, aus ihren Dispersionen in Petrolether ausgeflockt und jedesmal nach der Abtrennung des Petrolether/Methanol-Mediums in den gleichen Volumenteilen frischen Petrolethers redispergiert. Anschließend wurde die höhersiedenden unpolaren Flüssigkeiten hinzugeben und der Petrolether abdestilliert.

Die verwendeten Einsatzstoffe und deren Gewichtsanteile sind in der Tabelle angegeben.

An den resultierenden magnetischen Flüssigkeiten wurde die kinematische Viskosität V [$mm^2/s$] nach Ubbelohde bestimmt. Außerdem wurde die Sättigungsmagnetisierung $M_s$ [mT] in einem äußeren Magnetfeld von 160 kA/m gemessen. Die Langzeitstabilität LST wurde wie folgt ermittelt.

Die magnetische Flüssigkeit wurde 7 Tage lang bei Raumtemperatur in einem zwischen 0 und 40 kA/m variierenden inhomogenen Magnetfeld gelagert. Danach wurde die Sedimentation bestimmt und in einer Notenskala angegeben: Note 1 = 0-5 %, Note 2 = 6-10 %, Note 3 = 11-30 % und Note 4 = >30 % Sedimentation.

Die Meßergebnisse sind in der Tabelle angegeben.

Vergleichsversuche 1 bis 5

Es wurde wie in den Beispielen 1 bis 3 beschrieben verfahren, jedoch wurde kein Zinkferrit eingesetzt. Die Einsatzstoffe, deren Mengen sowie die resultierenden Meßergebnisse sind in der Tabelle angegeben.

Tabelle

| | Gew.-Teile Manganzink- ferrit/Zinkferrit | Trägerflüssig- keit *) Gew.-Teile | V [mm²/s] | $M_s$ [nTm³/g] | LST |
|---|---|---|---|---|---|
| Beispiel 1 | 70/60 | 50 A/ 50 B | 8530 | 28 | 1 |
| Beispiel 2 | 50/40 | 98 C/ 2 D | 940 | 23 | 2 |
| Beispiel 3 | 50/40 | 100 C/ – | 700 | 23 | 2 |
| Vergl.Vers. 1 | 80/– | 10 A/ 90 B | 2800 | 33 | 3 |
| Vergl.Vers. 2 | 70/– | – /100 B | 1760 | 27 | 4 |
| Vergl.Vers. 3 | 110/– | 100 A/ – | 600 | 36 | 3 |
| Vergl.Vers. 4 | 110/– | 98 C/ 2 D | 1350 | 36 | 3 |
| Vergl.Vers. 5 | 70/– | 95 C/ 5 D | 710 | 30 | 4 |

*) A: Esteröl                  (Reproxal der Fa. Texaco)
   B: Polyesteröl          (Reoplex GL der Fa. Ciba-Geigy)
   C: Kohlenwasserstofföl  (Progiline der Fa. Rhône-Poulenc)
   D: Poly-Kohlenwasserstoff  (Oppanol B 3 der BASF)

## Patentansprüche

1. Magnetische Flüssigkeiten, im wesentlichen bestehend aus in einer Trägerflüssigkeit kolloidal dispergierten, mit einem Tensid beschichteten superparamagnetischen Feststoffteilchen, dadurch gekennzeichnet, daß die Feststoffteilchen aus einer Mischung aus superparamagnetischen Ferritteilchen mit einer Sätti- gungsmagnetisierung $M_s$ von größer 50 nTm³/g und aus Ferritteilchen mit einer Sättigungsmagnetisie- rung $M_s$ von kleiner 10 nTm³/g bestehen.

2. Magnetische Flüssigkeiten gemäß Anspruch 1, dadurch gekennzeichnet, daß die Feststoffteilchen aus superparamagnetischen Ferritteilchen mit einer Sättigungsmagnetisierung $M_s$ von größer 60 und bis zu 90 nTm³/g und Ferritteilchen, mit einer Sättigungsmagnetisierung von kleiner 5 nTm³/g, jeweils mit einer mittleren Teilchengröße zwischen 3 und 20 nm bestehen.

3. Magnetische Flüssigkeiten gemäß Anspruch 2, dadurch gekennzeichnet, daß die Ferritteilchen mit einer Sättigungsmagnetisierung von kleiner 5 nTm³/g Zinkferrit der Formel $ZnFe_2O_4$ sind.

4. Magnetische Flüssigkeiten gemäß Anspruch 1, dadurch gekennzeichnet, daß die Trägerflüssigkeit eine polymere Komponente mit einem Molekulargewicht von größer 500 umfaßt.

## Claims

1. A magnetic fluid, essentially consisting of superparamagnetic solid particles coated with a surfactant and colloidally dispersed in a carrier liquid, wherein the solid particles consist of a mixture of superparamagnetic ferrite particles having a saturation magnetization $M_s$ greater than 50 nTm³/g and of ferrite particles having a saturation magnetization $M_s$ less than 10 nTm³/g.

2. A magnetic fluid as claimed in claim 1, wherein the solid particles consist of superparamagnetic ferrite particles having a saturation magnetization $M_s$ of from greater than 60 to not more than 90 nTm³/g and ferrite particles having a saturation magnetization less than 5 nTm³/g, each having a mean particle size

3. A magnetic fluid as claimed in claim 2, wherein the ferrite particles having a saturation magnetization of less than 5 nTm$^3$/g are zinc ferrite of the formula $ZnFe_2O_4$.

4. A magnetic fluid as claimed in claim 1, wherein the carrier liquid contains a polymeric component having a molecular weight greater than 500.

## Revendications

1. Fluides magnétiques, composés essentiellement de particules solides superparamagnétiques, dispersées de façon colloïdale dans un fluide support, et recouvertes d'un agent tensio-actif, caractérisés en ce que les particules solides sont constituées d'un mélange de particules de ferrite superparamagnétiques, à magnétisation de saturation $M_s$ supérieure à 50 nTm$^3$/g, et de particules de ferrite, à magnétisation de saturation $M_s$ inférieure à 10 nTm$^3$/g.

2. Fluides magnétiques selon la revendication 1, caractérisés en ce que les particules solides sont constituées de particules de ferrite superparamagnétiques, à magnétisation de saturation $M_s$ supérieure à 60 nTm$^3$/g et allant jusqu'à 90 nTm$^3$/g et de particules de ferrite, à magnétisation de saturation $M_s$ inférieure à 50 nTm$^3$/g, chacune d'une taille particulaire moyenne comprise entre 3 et 20 nm.

3. Fluides magnétiques selon la revendication 2, caractérisés en ce que les particules de ferrite à magnétisation de saturation inférieure à 5 nTm$^3$/g sont de la ferrite de zinc de formule $ZnFe_2O_4$.

4. Fluides magnétiques selon la revendication 1, caractérisés en ce que le liquide support comprend un composant polymère d'un poids moléculaire supérieure à 500.